# EUROPEAN PATENT SPECIFICATION

(11) **EP 3 673 462 B1**
(45) Date of publication and mention of the grant of the patent: **22.09.2021**
(21) Application number: 18917388.3
(22) Date of filing: 02.05.2018
(51) Int. Cl.: G06T 7/73, G06T 19/00, A63F 13/211, A63F 13/212, A63F 13/213, A63F 13/25, A63F 13/428, A63F 13/5255, A63F 13/56, G06F 3/01, G06T 19/20, A63H 17/00

(54) **OPTICALLY SUPPORTED OBJECT NAVIGATION**
OPTISCH UNTERSTÜTZTE OBJEKTNAVIGATION
NAVIGATION D'OBJET SUR SUPPORT OPTIQUE

(43) Date of publication of application: 01.07.2020
(73) Proprietor: SZ DJI Technology Co., Ltd., Shenzhen, Guangdong 518057 (CN)
(72) Inventor: KARATAYEV, Igor, Shenzhen Guangdong 518057 (CN); KUANG, Zheng, Shenzhen Guangdong 518057 (CN)
(74) Representative: Goddar, Heinz J.
(86) International application number: PCT/CN2018/085341
(87) International publication number: WO 2019/210465

(56) References cited:
- CN-A- 102 122 392
- CN-A- 104 279 960
- CN-A- 106 304 842
- CN-A- 106 681 510
- CN-A- 107 077 739
- JP-A- 2017 092 866
- US-A1- 2010 203 933
- US-A1- 2014 342 834
- US-A1- 2017 024 934

## Description

### FIELD OF THE INVENTION

This invention relates to systems and methods for determining the position of a moving object by image interpretation.

### BACKGROUND OF THE INVENTION

More and more, people are viewing events and things on some form of display, either remotely, or "virtually". In the case of purely "virtual reality" (VR), the position of displayed objects is totally under software control, since the scene the viewer sees does not necessarily correspond to any physical world and physical rules do not necessarily apply. For example, in a purely software-generated virtual world, nothing prevents a virtual horse from sprouting wings and flying into space, nor from a person walking through solid walls.

In other contexts, either by design or necessity, the displayed "world" is constrained at least in part by physical reality. For example, where a displayed scene corresponds to something happening in the physical world, normal laws of physics such as gravity may or must be followed. In some such contexts, the displayed world includes at least one displayed object whose location in the displayed world should correspond to the actual location of a physical object. This then requires some way to determine the location of the physical object. In some cases, it is impractical, too costly, too complicated, or otherwise not feasible to use high-precision, expensive location systems mounted on the physical object. The problem is then that location errors in the physical environment may often accumulate, such that the physical-to-virtual correspondence degrades beyond what is acceptable or desirable.

Even in cases in which there is no VR world being displayed, there is always a need for improvement when it comes to determining the position of moving physical objects using imaging techniques.

US 2010/203933 A1 disclose an entertainment system comprising a remotely controlled toy having a video camera operable to capture video images of a real environment and an entertainment device operable to communicate using a data communications link with the remotely controlled toy, in which the device comprises transmitting means operable to transmit, via the data communications link, control data to the remotely controlled toy that relates to the control of the remotely controlled toy, receiving means operable to receive, from the data communications link, video images captured by the video camera-of the remotely controlled toy, detecting means operable to detect a real environment feature within the real environment, processing means operable to generate a virtual image feature in dependence upon the detected real environment feature, and displaying means operable to generate a combined display of the captured video images and the virtual image feature such that the virtual image feature is arranged with respect to the video images so as to correspond to the position of the real environment feature within the real environment.

US 2014/342834 A1 discloses that mobile agents automatically manipulate components such as blocks on a working surface, to perform operations such as construction of generalized structures. The working surface and/or the components can have machine-readable codes to assist the agents in maintaining current knowledge of their respective locations. Agents identify components by type and location, and can move components according to directions; such directions can be provided by a user, or can be based on a pre-programmed directive, or can be determined dynamically based on current conditions or in response to actions of other agents. Agents may cooperate with one another. Agents can also respond to changes in the environment, alterations in works in progress, and/or other conditions, and may be configured to exhibit responses simulating emotional reactions. Different mobile agents can be associated with different character traits, which may be configured to change based on environmental conditions and/or the behavior of other mobile agents.

### BRIEF DESCRIPTION OF THE DRAWINGS

Figures 1A and 1B illustrate how distance to an object may be measured optically.
Figure 2 shows one example of a virtual, displayed environment that corresponds to a physical environment, in which at least one user-controlled object (UCO) is maneuvered.
Figure 3 illustrates the main hardware and software components of a UCO and its controller.
Figure 4 is a flowchart that summarizes how the position of a UCO may be fixed optically when possible, but using a secondary navigation system when not.
Figure 5 illustrates position-determination of an Unmanned Aerial Vehicle (UAV) using optical distance determination.
Figure 6 illustrates formation flying of two UAVs that are using optical distance determination for relative position-holding.

### DETAILED DESCRIPTION

The invention is defined by independent claim 1 defining a method for navigating a physical object in a physical environment corresponding to a virtual object moving in a virtual environment and independent claim 14 defining a system for maneuvering a virtual object in a virtual environment corresponding to a user-controlled physical object in a physical environment. Preferred embodiments of the invention are defined by the dependent claims.

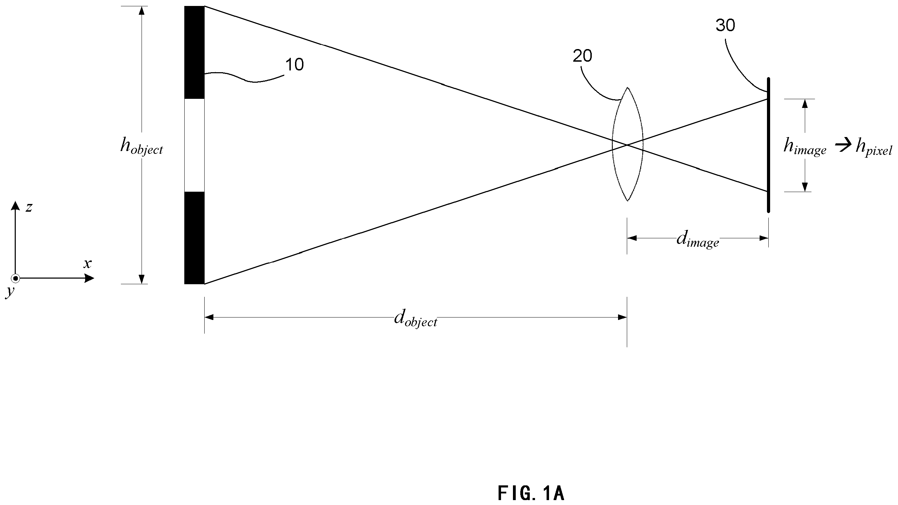

Figure 1A illustrates, in simplified form, an object 10 that is imaged by a lens 20 onto a sensor surface, that is, "screen" 30. Here, "object" may be a physical item itself, or some marking or image made on a physical item.

As shown, the height (that is, linear extension in some known direction, which could just as well be "width" or "diagonal") of the object in a direction z is given as *h_{object},* which is at a distance (in an x direction) *d_{object}* from the lens. The distance of the image from the lens and its imaged height are *d_{image}* and *h_{image},* respectively. The relationship between *h_{object}* and *d_{object}* on one hand, and *h_{image}* and *d_{image}* on the other, will depend on the type of lens 20 (for example, thinness and degree of convexity), its focal length, and its degree of magnification, and can be determined using the well-known lens and magnification equations. The important point, however, is that, given the lens characteristics, *h_{object}, h_{image}* and *d_{image}, d_{object}* can be calculated using known formulas.

In a digital camera, the screen 30 is typically a charge-coupled device (CCD), complementary metal oxide semiconductor (CMOS) device, etc., which is arranged as a known pattern of pixels. The number of pixels per unit distance is known in any particular direction. Usually, the pixel density is the same in different orthogonal directions, but this is not necessary. Relevant to this discussion is simply that for any image sensed on the sensor surface, its size in any direction may be computed in terms of pixels; thus, the image height in pixels *hₚᵢₓₑₗ* is a known function of the image height in whatever unit *h_{image}* is expressed in. In short, *hₚᵢₓₑₗ* = *f*(*h_{image}*), and *f* will be known a priori. Moreover, if *h_{object}* is known, as well as the lens characteristics and *d_{image}, hₚᵢₓₑₗ* = *g*(*d_{object}*), where the function g can be determined in advance. Inversely, *d_{object}* = *g*⁻¹(*hₚᵢₓₑₗ*)*,* and the function *g*⁻¹ may also be determined in advance.

Because there is a functional relationship between *h_{object}* and *h_{image},* regardless of direction, there is also an analogous functional relationship between the area of an object, such as object 10, and its imaged area, other factors remaining equal. Thus, for a given area of an object 10, the number of pixels its corresponding image comprises can also be determined: Without a change in magnification, the farther the object 10 moves from the lens 20, the smaller each portion of the object, and its area, will appear to be on the screen 30.

For a vertically (*z*-direction) extending, object, and assuming motion of the lens is constrained to the *x-y* plane, the distance *d_{object}* will represent a radius (depending on how thin and regular the object is) on which the lens is located. Now assume that there are two objects that are not co-located, each with known heights (or widths, or angular dimension, etc.). Using the technique above, the distance to (that is, radius from) each object may be determined, such that the lens must lie at one of the two intersections of the two corresponding circles. If distance to a third non-collocated object is determined, then the ambiguity of the intersections will be resolved, and one will have a "fix", that is, a single point at which the lens must be located. (Of course, in practice, there may be measurement error, such that the "fix" is a region of possible location, which can be made smaller and smaller by measuring distance to more objects, and increasing measurement precision.

If the lens (that is, whatever thing includes the lens) is not constrained to move in a plane, such as the *x-y* plane, then a fix may be obtained from measurement of distance to at least four objects.

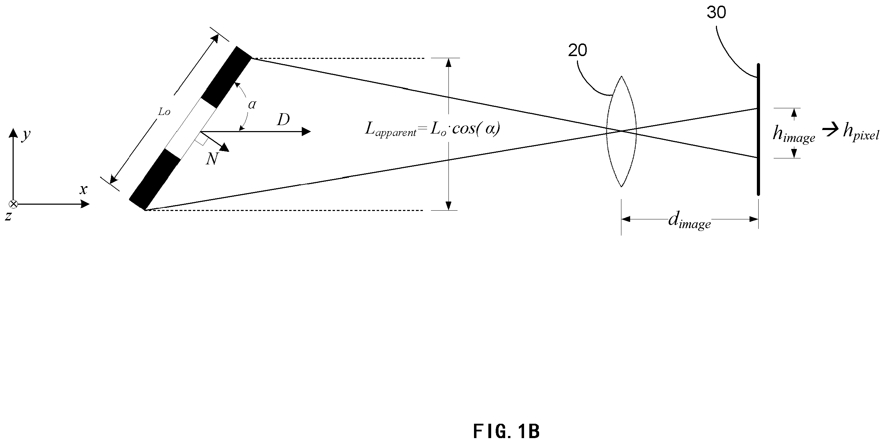

See Figure 1B. The more an imaging direction D deviates from the normal N of an object (linear or 2-D), the smaller it will appear, if the object extends in the N-D plane (*x-y* plane, as shown). For an object whose actual length is *Lₒ,* assuming the distance *d_{object}* stays constant, it will appear to have a length of *Lₐₚₚₐᵣₑₙₜ* = *Lₒ*·*cos(α),* where *α* is the angle between D and N. *Lₐₚₚₐᵣₑₙₜ* may of course also be represented in terms of pixels *hₚᵢₓₑₗ* of the corresponding image on the screen 30, since, from the perspective of the lens 20, it is simply a linear distance like any other.

Assume now that one knows *Lₒ, d_{object},* the lens characteristics, *d_{image},* and *Lₐₚₚₐᵣₑₙₜ* (which can be determined from *h_{image}*). A system may then compute the angle *α.* Assuming that movement of the lens is constrained to the *x-y* plane, there would be only two directions (bearings), at *α* and (180 - *α*) degrees the lens could lie in. If *h_{object}* is known, the technique of Figure 1A may be used to determine the distance *d_{object},* such that both the bearing and distance to the single object may be determined, although which of the two possible bearings is correct must be determined for a proper fix; this may be done by measuring distance and/or bearing to at least one additional object, or inference from the closest recent fix.

Thus, a user-controlled object (UCO) can use the above mechanism for determining distance to a marker. Also, if the UCO is provided with two or more imaging sensors with sufficient separation, yet another option for determining distance to a marker would be to apply known principles and relationships of epipolar geometry, that is, the geometry of stereo imaging.

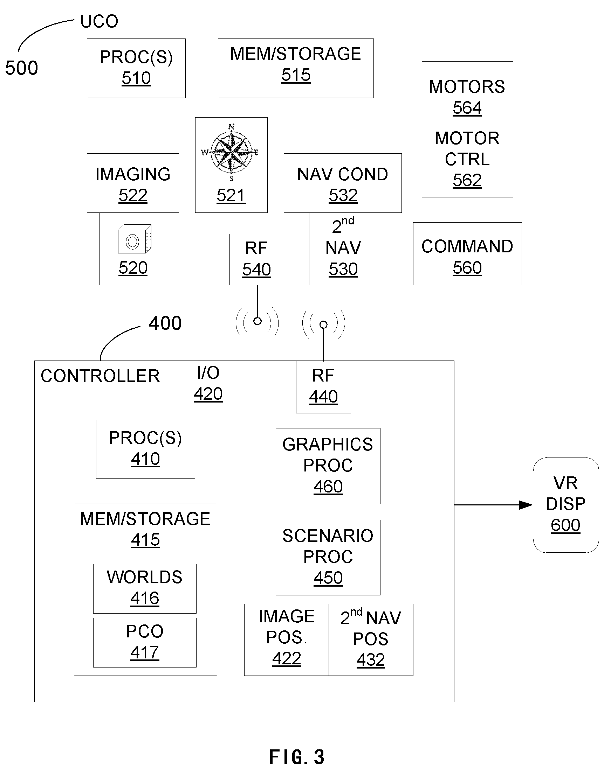

It would also be possible to include in the UCO 500 any device to determine bearing to a marker directly. For example, the UCO may be provided with a compass 521 (Figure 3), such as a flux-gate compass. When a marker is in the field of view of the camera 520, and especially near the center of that field of view, the bearing to that marker could then be input from the compass. Together with an estimate of the distance to that marker, the position of the UCO may be fixed in the *x-y* plane.

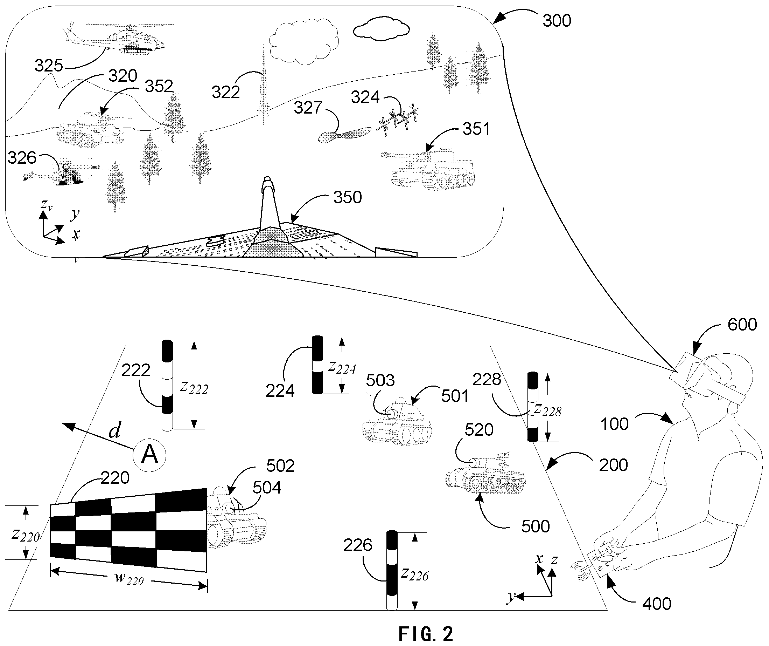

Figure 2 illustrates a physical environment 200, within which a user 100 maneuvers the user-controlled object (UCO) 500 by means of a controller 400. In Figure 2, the UCO 500 is a toy radio-controlled tank, but this is of course just by way of example. In the example shown in Figure 2, two other toy tanks 501, 502 are also maneuvering in the physical environment, either autonomously, or possibly under the control of other users (not shown), thus constituting other UCOs. In short, Figure 2 may illustrate a physical gaming environment in which multiple users compete in simulated toy tank battles. At least the user's 100 UCO 500 is provided with a camera 520 or other imaging device; in the example of Figure 2, the other UCOs 501, 502 are also provided with respective cameras 503, 504, although this is a design choice.

A plurality of markers 220, 222, 224, 226, 228 is also placed or otherwise made (such as by drawing lines and/or shapes on other features, or as features themselves) in known locations within the physical environment 200. In the z-direction (as shown), they extend *z220, z222, z224, z226,* and *z228,* respectively, and the two-dimensional marker 220 also extends in the y-direction a width of *w220.*

While maneuvering the UCO 500 in the physical environment 200, the user may view a corresponding virtual environment 300, for example, by looking at a display 600, such as the display generated by "virtual reality" VR googles. In other words, although the user is maneuvering a physical object in a physical environment, the user sees a corresponding virtual "world" in which motion of the UCO 500 is represented as motion of a corresponding virtual object 350 (in this example, an image of a tank). The view the user is presented preferably corresponds to the image captured by the camera 520 of the physical object 500. In the example, the user also sees virtual tanks 351, 352, which correspond to the toy tanks 501,502 in the physical environment 200, and which may move under the control of other users (not shown), for example, in a competition such as a mock tank battle. Those other users may then view the virtual environment 300 from the perspective of the cameras 503, 504 of their respective toy tanks 501, 502.

The system that generates the virtual environment display will typically do so with reference to a coordinate system such as *xᵥ-yᵥ-zᵥ.* To establish at least an approximate correspondence between the virtual and physical environments, the system may maintain a functional relationship between the virtual coordinate system and the physical coordinate system *x-y-z.* This relationship does not necessarily have to be a strict mapping or linear transformation, although this is of course possible, wholly or in part. For example, the toy tank 500 moving in the physical environment 200 might be constrained to move only in the *x-y* plane (it may be on a flat floor, for example), whereas the virtual movement might have motion in the *zᵥ* direction as well, such as if the virtual tank 350 moves over a hill. In such a case, just one design choice might be to map *x-y* movement to *xᵥ-yᵥ* movement, but then allow computer-generated vertical movement in the virtual environment.

Any other computer-generated static and/or moving objects, backgrounds, visual effects, etc., may also be included in the VR display, as is common, to perform whatever functions and actions the designer has programmed them to do. In the illustrated example, for example, the VR display includes trees, a hill 320, a radio tower 322, barriers 324, a helicopter 325, artillery 326, clouds, a lake 327, etc. Note that the hill 320, tower 322 and barriers 324 are shown as being in at least approximately the same positions in the virtual environment relative to the virtual tank 350 and the physical markers 220, 222, and 224 are relative to the physical object 500 and represent objects the tank 500 should not run into or over. This is a design choice, but has the advantage of increasing the physical-virtual correspondence. Just as the physical marker 220 extends measurably in both height and width, the displayed hill 320 may be displayed to do so as well, although this is also a design choice. As just one of an essentially unlimited number of scenarios, one or more of the markers 222-228 could be represented in the virtual environment as an anti-tank bunker with anti-tank guns. Thus, the tank (i.e. UCO 500), and thus the corresponding virtual object 350, would need to avoid an anti-tank shell; this evasive maneuver might then cause the UCO 500 to move and turn in such a way that it loses camera sight of the marker.

To determine a fix of the position of the UCO 500 in the physical environment, when it is in a position and its camera is oriented such that a sufficient number of the markers 220-228 are clearly in view, the techniques illustrated in Figures 1A, 1B and described above may be used to determine a distance from each marker as a function of the respective pixel heights *hₚᵢₓₑₗ.* As the UCO 500 moves in the physical environment, its fix is preferably updated frequently enough to provide a smooth corresponding motion of the virtual object 350.

In some embodiments, all or some of the markers 220-228 may be identical. In this case, their positions (coordinates) in the physical environment are preferably stored either in the controller or the UCO itself. In order to distinguish them, the UCO may then be started in the physical environment from a known position and orientation such that known ones of the markers will be visible when the UCO starts to move. In other embodiments, the markers may have different heights and/or widths, and these dimensions may then also be stored along with the locations of the markers. The respective dimensions may then be used when calculating distance to each marker.

In still other embodiments, the markers may bear some form of encoding. For example, as illustrated in Figure 2, the markers are provided with a pattern of black and white bands that could correspond to binary numbers. In the illustration, each marker has five bands, with each band taking up 1/5 of the observable height, although this is of course a design choice and will depend on the resolution and optical characteristics (such as light level) of the camera and physical environment. Merely by way of example, assume that the topmost band of each marker represents a most significant bit (MSB). Markers 222, 224, 226, and 228 therefore are marked to correspond to binary numbers 10010, 11011, 10110, and 10001, respectively. Each encoding could represent an identifier of each respective marker, for example, with respect to type, to which object it corresponds to in the virtual environment, etc. For example, 11110 could correspond to an artillery piece and 11011 could be a tank trap, etc. It would then be possible to easily change the layout of the physical environment, even dynamically, as long as some method is included to update the positional information of each marker in the UCO or controller in real time.

The type of encoding used for markers may be chosen depending on the ability of the UCO camera to resolve separate encoding elements (such as colored bands) at the maximum distance at which UCOs may need to measure distance to the respective marker. Even a relatively easy-to-resolve QR code Version 1 with ECC Level is able to encode 17 bytes of information, for example, and even simpler 2D codes made be used, and, for example, attached as "tags" to the markers.

One other option would be to have a predefined grid in the *x-y* plane of the physical environment, with each intersection representing a possible point of placement for a marker and thereby type of displayed virtual object. Assuming enough resolution of the UOC cameras and enough bands per marker, the grid position of the marker could be encoded as well. This would make it even easier to change the features in the physical environment, even dynamically.

One way to enable easy encoding and changing of the markers would be simply to have different colored sleeves that slide over and are stacked onto each marker. Alternatively, markers for each object type could be pre-made and pre-encoded.

In most cases, the camera 520 will be able to distinguish colors and not simply a grayscale, although this would be possible. In implementations in which color resolution is possible, the encoding of the markers could also be by color, which would increase the amount of information that can be encoded on each marker. Known methods may then be used to distinguish the colors of each encoding band on each marker and the information necessary to interpret each encoding may be stored in either the UOC or controller.

Note that, in implementations in which the UCO 500 is able to move vertically as well (for example, it is an Unmanned Aerial Vehicle - UAV --, that is "drone"), markers may be placed (or painted) onto the *x-y* surface and used to determine distance in the z-direction as well, although more markers will generally be needed to establish a fix. More markers may then be needed to establish position even in the *x-y* plane, since they may be viewed "off-perpendicular" as in Figure 1B and instead of lines of equal distance to each marker there will be surfaces of equal distance.

Assume, however, that the UCO has moved to roughly position A (circled) in Figure 2, with a camera orientation in direction *d*. As illustrated, not enough markers would then be in view of the camera 520 to enable getting a fix optically. The UCO 500 may therefore be provided with a secondary navigation system 530 (Figure 3). The secondary navigation system may be based, for example, on a commercially available inertial sensor such as an Inertial Measurement Unit (IMU) and its related signalprocessing components and software, on triangulation or trilateration of radio-frequency signals from transmitters that could be placed near the physical environment, or simple dead-reckoning (DR) measurements based on, for example, absolute and relative rotation of wheels on the UCO.

In applications such as for toys or consumer products, it may not be possible for reasons of size or cost to use high-precision sensors as the secondary navigation system. Even in other implementations, however, inertial systems accumulate error, since every error in acceleration measurement is integrated twice to determine position. RF-based position fixing typically has inherently lower precision than optical fixing, measuring wheel rotation for DR navigation is typically both imprecise and leads to accumulated error.

When the UCO loses its ability to fix its position optically, via distance-measurement to the markers 220-228, its then current, that is, most recent, optical fix may be used as the initial position for methods that require one, such as for IMU- or DR-based navigation. The virtual UCO 350 position in the virtual environment may then be derived from the secondary navigation signals for as long as this is necessary. When the UCO 500 returns to a position and camera orientation that allows for more precise optical fixing by imaging the markers, both the physical position and, via transformation, the corresponding virtual position, may return to being derived from distance-to-marker measurements.

When the UCO returns to optical navigation, the first fix it obtains (or some function of more than one fix) may be compared with the most recent non-precision fix to determine the amount of error accumulated during the time non-precision navigation was being used. This difference may then be used as a correction factor in the subsequent period when non-precision navigation is necessary. As an alternative, and if such correction is implemented at all, it would also be possible to use both the primary, optical navigation system and the secondary navigation system at the same time so as to compile error measurements and a correction factor for the non-precision system even before the system needs to switch to it.

In short, embodiments use precision navigation (in the sense that it does not accumulate error) based on optical estimation of distance from the UCO camera to visible markers when this is possible, but switch to potentially error-accumulating, but in any case a less precise navigation system when necessary.

Figure 3 shows the main system components in an embodiment in which a user maneuvers the UCO 500 via the controller 400 by viewing a VR display 600. The controller 400 will include one or more processors 410, which execute the code that implements the various software-defined functions, as well as any fixed code or firmware used for controlling the UCO according to user input, processing the various signals, communicating with the UCO, and generating a display of the virtual environment. The controller includes one or more volatile and/or non-volatile memory and storage components 415 that may be used to store executable code, operational data, etc.

Code and data that defines the graphical presentation of at least one virtual environment may be stored in the memory/storage as "worlds" 416. Each world may, for example, define a different gaming scenario. Operational data relating to the UCO itself may also be stored in a region 417. A standard I/O module 420, including both hardware and any necessary code, is included to interpret the movements of control devices such as one or more joysticks, buttons, trackpads, touchscreen displays, etc., that the user may be provided to control the UCO 500. In implementations in which the UCO is radio-frequency controlled, a conventional transceiver 440 may be included to communicate with a similar transceiver 540 in the UCO.

An image-based positioning module 422 comprises the executable code and, if not included elsewhere, the hardware, needed to input the data related to the camera 520 image, identify markers within the image, extract the pixel heights (and/or widths, radii, encodings, etc.) of each visible marker, perform the calculations summarized above to determine distance to each marker (and, in the case of properly configured 2-D markers, bearing, as shown in Figure 1B), and to compute the point of intersection of the various lines of constant distance from each marker, which is then the optical fix. The module 422 may also determine if there is insufficient information (for example, not enough markers being imaged) for an optical fix and, if not, may signal either activation of the secondary navigation system 530, or at least that the secondary navigation signals are to be used to determine virtual UCO position until sufficient optical data is reacquired.

A secondary navigation module 432 receives the data from whichever secondary navigation system (such as IMU) that is in the UCO, and, from that data, using known algorithms from a starting position, estimates a fix. The secondary navigation module may also receive any correction data derived from comparison with the primary system 422 when there is a transition.

A scenario processing module 450 determines, based on user input, the current world data 416, and positioning data from either system 422, 432, what is to be displayed in the virtual environment. This may also include "events", which may be triggered according to the worlds data stored in region 416 and, in some cases, either the absolute position of the UCO, or its position relative to other UCOs or objects. For example, when the user's UCO 500 enters a particular area of the physical environment 200, and if other pre-programmed conditions are met (such as time, relative position of other users' UCOs, randomly, etc.) the artillery piece 326, which may correspond to marker 226, could be displayed as having fired a round, which can then be shown as impacting in the virtual environment, or even on the UCO 500. It may also be used as the module that converts the computed physical fix coordinates of the UCO 500 into the position, that is, coordinates, in the display of the virtual environment, of the corresponding virtual object 350. In short, the scenario processing module 450, following whatever code and data is stored for a given scenario and world, may interpret the current image frame (or frame series) and control the "action" of the displayed virtual environment accordingly.

Once the data defining the current frame of the virtual display has been computed and compiled, it is passed to whichever graphics processing module 460 that is associated with the VR display 600, which then may display the data in any conventional manner.

Different software and hardware components are shown as being separated in Figure 3, but this is for purposes of illustration. As preferred by the system designer, any or all of these may be combined, as may be appropriate ones of the hardware components.

Depending on the implementation, it would also be possible for many of the functions of the controller 400 to be included in some superior, administrative system, such that the controller 400 functions primarily as an I/O device. For example, a single server (not shown) could function as the controller and computational system for all users in a common gaming environment. In the other "direction", it would also be possible to include some of the controller functions in the VR headset (or other display device) itself.

The UCO 500 will include at least one processor 510 and some form of memory/storage 515, which, as usual, may be used to store the executable code and data that define the software components in the UCO. The processor 510 may, but need not be, a general-purpose component; rather, the processing in the UCO could be carried out using one or more ASICs. An image-processing module 522 receives the data from the camera 520 and conditions it in any conventional manner for transmission to the controller for further processing. Similarly, a navigation data conditioning module 532 receives the data from whichever type of sensor(s) are used for secondary navigation, such as IMU output, wheel rotation sensors, etc., and conditions this data also for transmission to the controller.

User and controller-generated commands to the UCO are received via the RF transceiver 540 and are interpreted by a command module 560. Examples of such command might be commands to accelerate or decelerate, turn, maneuver parts of the UCO as opposed to movement of the UCO as a whole, such as rotating a tank turret, firing rounds, sounding horns, etc. These commands are then processed into a form suitable for execution by a motor controller 562, which then actuates any motors 564 or other form of actuators according to the commands.

It is not necessary for various computations or data storage to take place only in the components described above with reference to Figure 2; rather depending on the chosen design of the UCO and controller, some of the computation and storage tasks indicated as happening in the UCO could be performed within the components of the controller instead, or vice versa. In some implementations, for example, it may be important to reduce the power consumption and/or computational load of components of the UCO, in which case it might be preferable to offload all but essential processing tasks to the controller 400. In other implementations, power consumption and/or computational load may not be as much of a concern, and the designer may want the UCO to have more autonomous processing capability. In such as case, the designer may choose to download into the UCO itself the positional data for markers, and program the imaging module 522 to perform the fix-computing tasks of the controller module 422. The unit in which such processing and storage tasks are carried out is thus a design choice.

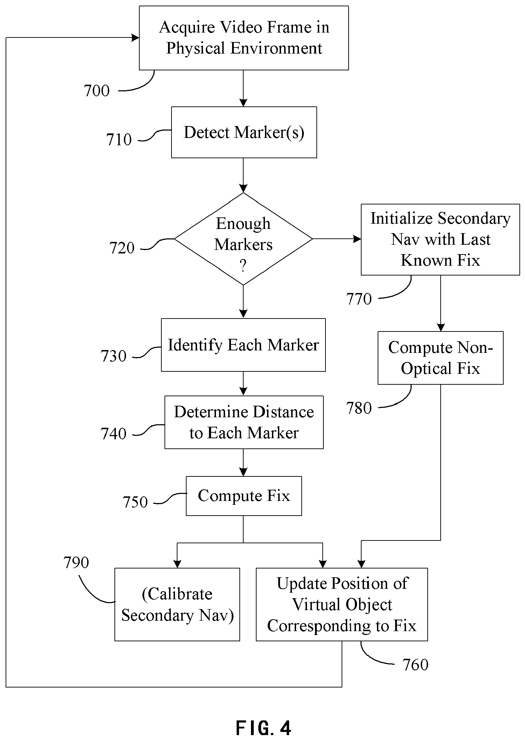

Figure 4 summarizes by way of a flowchart the main operations used to determine a fix for the UOC using optical navigation as a primary method but with a secondary, possibly non-optical back-up navigation method.
700: As is well known, video is a series of frames. Using any known method, a video frame is acquired from the video stream from the camera 520. Because the frame rate will generally be much higher than the UOC is fast, it will typically not be necessary to capture and analyze every frame of the video stream; rather, frames may be captured periodically, either, for example, every n'th frame or every time interval t, which may be chosen depending on the type of UOC involved and any other standard design considerations.
710: Using any known image analysis method, such as pattern-matching, any of the markers visible within the captured frame are detected.
720: In order to be able to compute a fix, there must be enough of the appropriate type of markers. For example, two or more markers having defined sizes in one dimension may be required for a fix, and three markers may be needed to resolve any ambiguity in the possible double fixes that might come from using only two markers. Similarly, if a bearing sensor is included in the UOC, then only a single marker and the bearing to it might be needed to obtain a fix, or a single marker defined in two dimensions, such as marker 220, might be sufficient.
730: In some embodiments, all of the markers may be identical with respect to type, shape, and size, but it will still be necessary to identify which marker is which. This could be done even without optical encoding such as color-coded pattern. For example, it would be possible to identify markers as long as an initial position and orientation of the UOC are established and the position of each marker in the physical environment is predefined and stored in the UOC or in the controller. In other embodiments, markers may be encoded for identification and the encodings might even include positional information, as described above. Regardless of the embodiment, each marker is identified using the appropriate method.
740: Using whichever method is appropriate for each marker, the distance to it is determined. Various methods for doing so are described above.
750: Given the distance measurements to the markers, a fix is then computed so as to establish the location of the UOC in the physical environment.
760: The coordinates of the physical fix computed in the previous step are then passed to the modules that determine the apparent position of the virtual object 350 in the virtual environment 300. Note that it is not necessary to have a 1:1 physical-two-virtual scaling; rather, each unit of distance in the physical environment may be scaled by any chosen factor to correspond to some other unit in the virtual environment. For example, 1cm in the physical environment could be scaled to correspond to 1m in the virtual environment. It would also be possible to have different scaling factors for different markers so as to create a virtual display having an aspect ratio that is different from the physical environment. For example, by changing scaling factors for lateral markers in the physical environment (assuming by way of example that it has sides as opposed to being circular) the physical environment might be substantially square but the virtual environment could be made to appear rectangular. Once the position of the virtual object has been updated, the system may return to acquiring the next video frame.
770: If not enough markers of the proper type are acquired in the current video frame, the system may switch to whichever secondary navigation system is included, such as an IMU. The last known fix of the UOC in the physical environment may then be used as the initial position for the secondary navigation system.
780: A fix using the secondary system is then computed for the UOC, and this fix is used to update the position of the virtual object. The system may then again grab a frame of the video stream to see if there are currently enough optical markers.
790: As an optional step, the secondary navigation system may be calibrated either when the system returns to optical and therefore higher precision position fixing, or continuously, that is, even when optical navigation is being used. Thus, the calibrated secondary navigation system can improve the precision for computing the non-optical fix when it is needed.

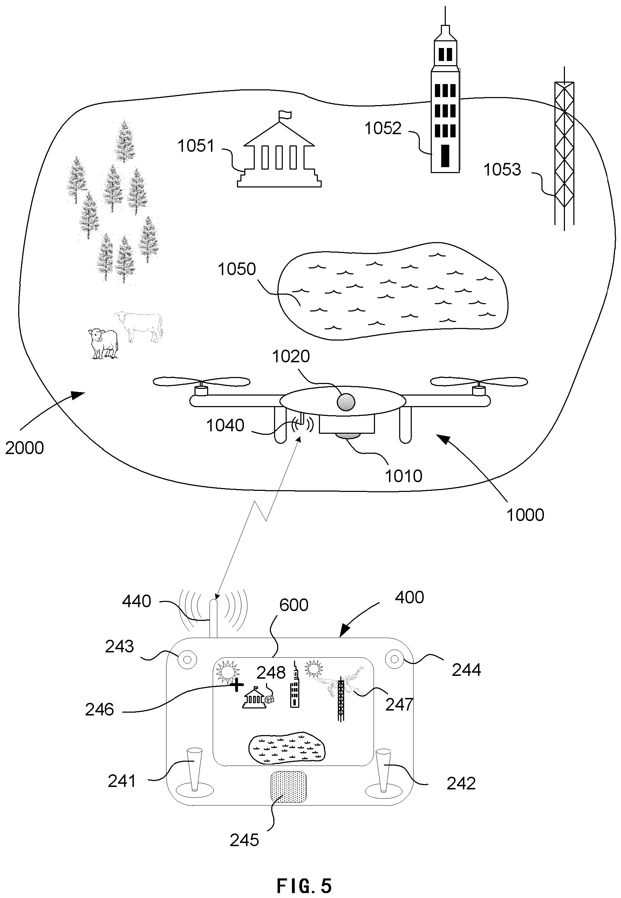

In Figure 5, a user is maneuvering a UAV 1000 in a physical environment 2000 using a controller 400, which, as with other controllers, may include a display 600 (in this case, not within a VR headset but rather a standard display), with two joysticks 241, 242, a couple of buttons 243, 244, and a trackpad 245 which may be used, for example, to control the position of a cursor 246 on the display 600. In this scenario, the display shows a "virtual" environment in the sense that it is a graphically generated representation of the physical environment imaged by the camera 1020.

The RF transceiver 440 transmits commands and receives data from the UAV 1000, which has a corresponding transceiver 1040, as is usual for UAVs. In this example useful for understanding the invention, the UAV has two cameras 1010 and 1020, the former of which is oriented mainly downward and the latter of which has a horizontal view of field. Either or both may be maneuverable using standard gimballing and actuators, such that one camera might be able to orient itself for imaging in the horizontal and vertical directions under user control.

As illustrated, the UAV is imaging certain features in the physical environment, for example, a lake 1050, two buildings 1051, 1052 and a tower 1053. Other features such as trees and animals may also be imaged, depending on the orientation of the UAV and the cameras. This example useful for understanding the invention provides for one or more of the following operations, which may be selected and carried out using the controller and UCO components shown in Figure 3.

The first operation is station-holding: The user places the cursor 246 sequentially over two or more of the imaged objects, selects these, and the image position module 422 then interprets the following UAV images and passes commands to the scenario processor 450 such that the UAV maintains a position in which the image size of the selected objects remains the same. In other words, instead of proceeding from imaging an object and determining distance based on a known height of the physical objects (which serve as markers), this example useful for understanding the invention operates in "reverse" by using selected pixel heights (or widths, or areas) as the reference, regardless of what linear distance to the object this may correspond to. For example, if one or more of the image sizes begins to decrease, the UAV may autonomously (under control of the image position module 422) generate commands that cause the UAV to fly towards whichever object(s) whose image size(s) has/have decreased.

Station-holding could be combined with station-finding as well. In this example useful for understanding the invention, the heights of the selected objects and the desired distance from each may be input using any conventional method and controller operations, such as via a displayed number pad or alphanumeric input, for example, in implementations in which the display 600 is also touch-sensitive. Using the equations described for Figures 1A and 1B above, albeit inversed, the image position processing module could then convert the input data into the pixel heights at the desired station position, and then autonomously maneuver to that position. One way to do this would be for the UAV to first fly towards one of the selected objects until it is at the correct distance from it, then fly in an arc, maintaining the pixel height of that object, until the pixel height of the second object is obtained. This procedure could be repeated for multiple points, each representing a "station", such that a trajectory, that is, a route, could be programmed into the UAV, which may then follow it using optical distance estimation as described above. Flight control may be provided using any conventional components, such as the command module 560 and motor controller 562 shown in Figure 3 for the generalized UCO, which may comprise the flight control system.

Marker selection may be according to user input, via the controller, such as with the cursor on the display, or may be autonomous, for example, under the control of the image processing module 522. For example, if the user simply indicates "Hold", the UAV's image processing module 522, using known methods, could extract any two or more image features that are definable and have a pixel-measurable size in at least one dimension, and maneuver so as to maintain the corresponding relative distances. If a compass is included in the UAV circuitry, then a single marker and the bearing to it may be used instead, or in addition.

In some cases, only one suitable object may be in the field of view of the UAV camera. It would in such a case be possible to determine a relative distance to that object, but then perform a yaw maneuver until at least one other measurable object is acquired. The UAV could then hold position by yawing back and forth periodically so as to capture each marker image, correct distance as needed, and then yaw back to the other. If necessary, known feature-recognition methods (such as pattern-matching) may be used to ensure proper identification of the different objects during yaw maneuvers.

Yet another operation could be to orbit: After a physical object is selected (either by the user or autonomously) as a marker and the distance to it is estimated optically, the user could enter any appropriate command, via the controller, for the UAV to fly in an orbit, that is, with horizontal movement but at a constant distance from the object.

The display 600 may show an untransformed representation of what the UAV camera(s) "sees". In other words, the UAV may be used simply to acquire a video image, which the display shows to the user. In other implementations, the displayed scene could be a physical-to-virtual transformation as in Figure 2, whereby the physical features such a buildings could be used as markers.

Hybrid scenarios are also possible: at least some of the actual image acquired by the UAV camera 1020 could be displayed, but with a computer-generated overlay that augments the displayed reality. For example, in one implementation, a user could maneuver the UAV through an actual city, at least some of whose buildings and other features serve as markers for purposes of optical navigation, but at least some of the display could be overlaid or replaced with virtual features, backgrounds, etc.

In Figure 5, for example, the display (corresponding to a virtual displayed environment) has been augmented to include multiple suns, a dragon 247, and a treasure chest 248. Such an example useful for understanding the inventionmight be used, for example, to enable UAV-implemented "treasure hunts", in which players maneuver their respective UAVs in the physical environment to find objects, which might be either actual, physical objects, or system-generated, virtual objects (such as the treasure chest 248.

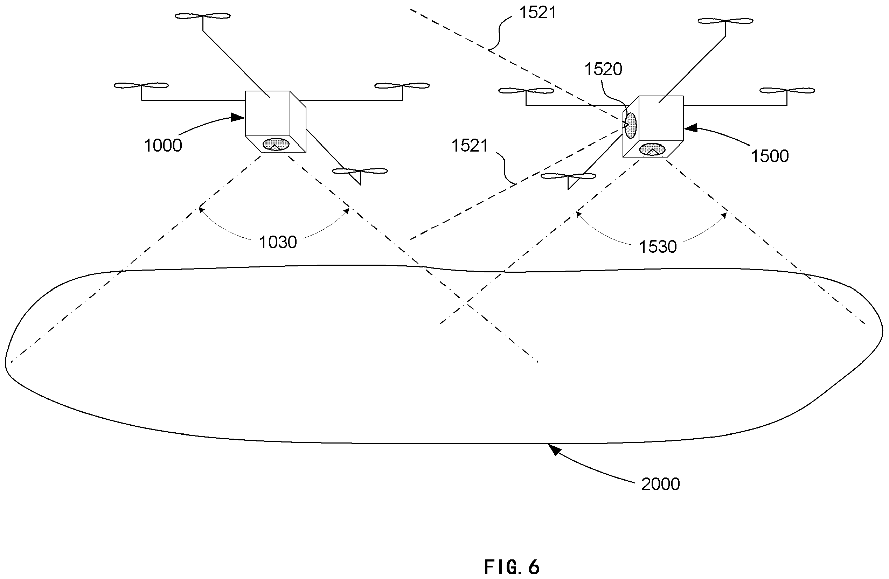

Figure 6 illustrates yet another example useful for understanding the invention in which optical distance estimation is used to enable a pair of UAVs 1000, 1500 to fly in formation at a fixed distance apart. In this example useful for understanding the invention, at least one of the UAVs - a "follower UAV" -- has a camera that, when in flight, can maintain the other "leader" UAV in its field of view. As illustrated, a substantially horizontally oriented camera 1520 has a field of view 1521 in which the leader UAV 1000 appears. If either the size of some part of the leader UAV body is known, or an easily acquired and imaged marker is included on the leader UAV, then the follower UAV, using the distancing techniques described above, may maintain a constant corresponding pixel height and thus distance to the leader UAV. Alternatively, a user who can see the leader UAV on the controller display of the follower UAV could, using the technique described above with reference to Figure 5, trigger a measurement by the follower UAV of the leader UAV when he sees it is at the proper distance, whereupon the follower UAV may autonomously maneuver so as to maintain that distance and/or orientation (if the technique of Figure 1B is also applied). If a compass is included in at least the follower UAV, then the bearing to the leader UAV may also be measured and maintained.

One use of the example useful for understanding the invention illustrated in Figure 6 is stereoscopic imaging of a physical area 2000. Assume that the UAVs 1000, 1500 fly in formation as described above, with overlapping fields of view 1030, 1530 downward. Each UAV may then transmit its imaging data back to respective controllers, or to some other system. Since the image data would represent images of substantially the same area, but with a relative offset, a 3-D image of the physical environment could be generated using known methods.

In some stereoscopic imaging systems, image separation, that is, parallax, is provided by taking images from a single camera but with a time gap between each as the UAV moves. Although satisfactory in many implementations, uniform frame distribution then depends on an ability to maintain a constant velocity or otherwise acquire precise movement information, e.g. using an inertial measurement unit (IMU). Using twin UAVs, however, with distance holding, ensures a constant separation regardless of velocity or direction.

One other use of stereoscopic imaging from two or more UAVs flying in formation is that different UAVs may use cameras that operate in different wavelengths or types of polarization, are provided with different color filters, etc. Still another possible reason to implement formation flying using fixed optical distance separation may be as simple as two friends wanting to fly their respective drones in formation for fun.

## Claims

1. A computer-implemented method for navigating a physical object (500) in a physical environment (200) corresponding to a virtual object (350) moving in a virtual environment (300), comprising:
A) when the physical object (500) is in a first position in which at least one physical marker (220, 222, 224) is in a field of view of at least one imaging device mounted on the physical object (500),
i) obtaining an image of the at least one physical markers (220, 222, 224);
ii) determining a physical position of the physical object (500) in the physical environment (200) based on an evaluation of the obtained image of the at least one physical marker (220, 222, 224); and
iii) determining, for the virtual object (350), a virtual position within the virtual environment (300) corresponding to the determined physical position of the physical object (500) in the physical environment (200);
B) when the physical object (500) is in a second position, following the first position, in which no more than a predetermined number of the physical markers (220, 222, 224) is in the field of view,
i) estimating the physical position of the physical object (500) using a secondary positional system of the physical object (500), said secondary positional system operating independently from optical reference to the physical markers (220, 222, 224) and the secondary positional system having an accumulating error; and
ii) determining, for the virtual object (350), an estimated virtual position within the virtual environment (300) corresponding to the estimated physical position;
and
wherein the method is **characterized**
**by** initializing, upon transition of the physical object (500) from the first position to the second position, the secondary positional system with location parameters corresponding to a most recent position of the physical object (500) determined when the physical object (500) was in the first position,
by estimating an amount of accumulated error from the accumulating error when the physical object (500) moves from the second position to the first position, and
by applying a correction to the secondary positional system corresponding to the estimated amount of accumulated error.

2. The method of claim 1, further comprising:
determining a physical distance from the physical object (500) to each of the imaged physical markers (220, 222, 224) as a function of the imaged sized of each of the physical markers (220, 222, 224) relative to a characteristic of the imaging device; and
determining the physical position as a function of the determined physical distance(s).

3. The method of claim 2, in which each physical marker (220, 222, 224) has a respective predetermined size in at least one dimension.

4. The method of claim 2, further comprising providing at least one of the physical markers (220, 222, 224) with an optically interpretable encoding indicating at least one characteristic chosen from the group: a predetermined size in at least one dimension, position within the physical environment (200), and type of a corresponding display feature.

5. The method of claim 3, in which the evaluation of the obtained image of each imaged physical marker (220, 222, 224) comprises comparing an imaged size of each obtained image in the at least one direction with a reference within the imaging device, or
in which:
at least one of the physical markers (220, 222, 224) has predetermined sizes in at least two dimensions;
the evaluation of the obtained image of each imaged physical marker (220, 222, 224) comprises comparing an imaged size of each obtained image in the at least two directions with at least one respective reference within the imaging device.

6. The method of claim 2, further comprising associating different scaling factors to different ones of the physical markers (220, 222, 224), such that determining the estimated virtual positions of the respective different virtual objects (350) relative to each other is adjustable as a function of the respective scaling factors.

7. The method of claim 1, further comprising, on a display, generating an image of the virtual object (350) at a determined virtual position within the virtual environment (300) corresponding to the determined physical position of the physical object (500) in the physical environment (200).

8. The method of claim 7, further comprising associating at least one of the physical markers (220, 222, 224) with a corresponding virtual feature displayed on the display, preferably
further comprising generating a moving image of at least one moving virtual feature displayed within the display having a feature position referenced to the virtual position determined corresponding to at least one of the physical markers (220, 222, 224).

9. The method of claim 1, in which the display is included in a virtual reality headset.

10. The method of claim 1, wherein estimating an amount of accumulated error from the accumulating error when the physical object (500) moves from the second position to the first position comprises comparing a most recent position obtained using the secondary positional system when the physical object was in the second position with a first subsequent position determined when the physical object has returned to the first position.

11. The method of claim 10, further comprising, upon transition of the physical object (500) from the second position to the first position, displaying a transitioning virtual environment (300) from an estimated state of the virtual environment (300) when the physical object (500) was in the second position to a current state of the virtual environment (300) corresponding to the physical object (500) was in the first position.

12. The method of claim 1, further comprising generating an event for display in the virtual environment (300) based on the physical position of the user-controlled physical object (500) in the physical environment (200).

13. The method of claim 1, in which the first and second positions of the physical object (500) are dependent on an angular orientation of the imaging device.

14. A system for maneuvering a virtual object (350) in a virtual environment (300) corresponding to a user-controlled physical object (500) in a physical environment (200), comprising:
a controller (400) enabling a user to maneuver the physical object (500) in the physical environment (200);
an imaging device included with the physical object (500), and provided, when the physical object (500) is in a first position in the physical environment (200) in which at least one physical marker (220, 222, 224) is in a field of view, for obtaining an image of the at least one physical marker (220, 222, 224);
an image-based positioning module (422) included with the controller (400) provided for determining a physical position of the physical object (500) in the physical environment (200) based on an evaluation of the obtained image of the at least one physical marker (220, 222, 224);
a secondary positional system included with the physical object (500) provided, when the physical object (500) is in a second position, following the first position, in which no more
than a predetermined number of the physical markers (220, 222, 224) is in the field of view, for determining the physical position of the physical object (500), said secondary positional system operating independently from optical reference to the physical markers (220, 222, 224) and the secondary positional system having an accumulating error;
a scenario processing module (450) included with the controller (400) provided for determining, for the virtual object (350), a virtual position within the virtual environment (300) corresponding to the determined physical position of the physical object (500) in the physical environment (200);
a display (600) for displaying the virtual object (350) in a display position corresponding to the determined physical position and wherein the system is **characterized by** one or more processors included in the
controller or the physical object and configured to upon transition of the physical object from the first position to the second position, initialize the secondary positional system with location parameters corresponding to a most recent position of the physical object (500) determined when the physical object (500) was in the first position,
estimate an amount of accumulated error from the accumulating error when the physical object (500) moves from the second to the first position, and
apply a correction to the secondary positional system corresponding to the estimated amount of accumulated error.

## Patentansprüche

1. Computerimplementiertes Verfahren zum Lenken eines physischen Objekts (500) in einer physischen Umgebung (200), das einem virtuellen Objekt (350) entspricht, das sich in einer virtuellen Umgebung (300) bewegt, wobei das Verfahren Folgendes umfasst:
A) wenn sich das physische Objekt (500) in einer ersten Position befindet, in der sich mindestens eine physische Markierung (220, 222, 224) in einem Sichtfeld von mindestens einer Bildgebungsvorrichtung befindet, die am physischen Objekt (500) montiert ist,
i) Erhalten eines Bildes der mindestens einen physischen Markierungen (220, 222, 224);
ii) Bestimmen einer physischen Position des physischen Objekts (500) in der physischen Umgebung (200) auf Basis einer Beurteilung des erhaltenen Bildes der mindestens einen physischen Markierung (220, 222, 224) und
iii) Bestimmen einer virtuellen Position in der virtuellen Umgebung (300), die der bestimmten physischen Position des physischen Objekts (500) in der physischen Umgebung (200) entspricht, für das virtuelle Objekt (350);
B) wenn sich das physische Objekt (500) in einer zweiten Position befindet, die der ersten Position folgt und in der sich nicht mehr als eine vorbestimmte Anzahl der physischen Markierungen (220, 222, 224) im Sichtfeld befinden,
i) Schätzen der physischen Position des physischen Objekts (500) unter Verwendung eines sekundären Positionssystems des physischen Objekts (500), wobei das sekundäre Positionssystem unabhängig von einem optischen Bezug auf die physischen Markierungen (220, 222, 224) betrieben wird und wobei das sekundäre Positionssystem einen Akkumulationsfehler aufweist; und
ii) Bestimmen einer geschätzten virtuellen Position in der virtuellen Umgebung (300), die der geschätzten physischen Position entspricht, für das virtuelle Objekt (350) und
wobei das Verfahren durch Folgendes gekennzeichnet ist
nach Übergehen des physischen Objekts (500) von der ersten Position zur zweiten Position Initialisieren des sekundären Positionssystems mit Standortparametern, die einer letzten Position des physischen Objekts (500) entsprechen, die bestimmt wurde, als sich das physische Objekt (500) in der ersten Position befand,
Schätzen eines Betrags eines akkumulierten Fehlers anhand des Akkumulationsfehlers, wenn sich das physische Objekt (500) von der zweiten Position zur ersten Position bewegt, und
Anwenden einer Korrektur auf das sekundäre Positionssystem entsprechend des geschätzten Betrags des akkumulierten Fehlers.

2. Verfahren nach Anspruch 1, das ferner Folgendes umfasst:
Bestimmen eines physischen Abstands vom physischen Objekt (500) zu jeder der abgebildeten physischen Markierungen (220, 222, 224) in Abhängigkeit von der abgebildeten dimensioniert jeder der physischen Markierungen (220, 222, 224) mit Bezug auf eine Eigenschaft der Bildgebungsvorrichtung und
Bestimmen der physischen Position in Abhängigkeit vom bestimmten physischen Abstand bzw. von den bestimmten physischen Abständen.

3. Verfahren nach Anspruch 2, bei dem jede physische Markierung (220, 222, 224) eine jeweilige vorbestimmte Größe in mindestens einer Dimension aufweist.

4. Verfahren nach Anspruch 2, das ferner das Versehen mindestens einer der physischen Markierungen (220, 222, 224) mit einer optisch interpretierbaren Codierung umfasst, die mindestens eine Eigenschaft anzeigt, die aus der folgenden Gruppe gewählt ist: eine vorbestimmte Größe in mindestens einer Dimension, Position in der physischen Umgebung (200) und Typ eines entsprechenden Anzeigemerkmals.

5. Verfahren nach Anspruch 3, bei dem die Beurteilung des erhaltenen Bildes jeder abgebildeten physischen Markierung (220, 222, 224) das Vergleichen einer abgebildeten Größe von jedem erhaltenen Bild in der mindestens einen Richtung mit einem Bezug in der Bildgebungsvorrichtung umfasst oder
bei dem:
mindestens eine der physischen Markierungen (220, 222, 224) vorbestimmte Größen in mindestens zwei Dimensionen aufweist;
die Beurteilung des erhaltenen Bildes jeder abgebildeten physischen Markierung (220, 222, 224) das Vergleichen einer abgebildeten Größe von jedem erhaltenen Bild in den mindestens zwei Richtungen mit einem jeweiligen Bezug in der Bildgebungsvorrichtung umfasst.

6. Verfahren nach Anspruch 2, das ferner das Verknüpfen von verschiedenen Skalierungsfaktoren mit verschiedenen der physischen Markierungen (220, 222, 224) umfasst, derart, dass das Bestimmen der geschätzten virtuellen Positionen der jeweiligen verschiedenen virtuellen Objekte (350) relativ zueinander in Abhängigkeit von den jeweiligen Skalierungsfaktoren einstellbar ist.

7. Verfahren nach Anspruch 1, das ferner das Erzeugen eines Bildes des virtuellen Objekts (350) auf einer Anzeige in einer bestimmten virtuellen Position in der virtuellen Umgebung (300), die der bestimmten physischen Position des physischen Objekts (500) in der physischen Umgebung (200) entspricht, umfasst.

8. Verfahren nach Anspruch 7, das ferner das Verknüpfen von mindestens einer der physischen Markierungen (220, 222, 224) mit einem entsprechenden virtuellen Merkmal, das auf der Anzeige angezeigt wird, umfasst und vorzugsweise
ferner das Erzeugen eines Bewegtbildes von mindestens einem sich bewegenden virtuellen Merkmal, das in der Anzeige angezeigt wird und eine Merkmalsposition aufweist, die sich auf die virtuelle Position bezieht, die entsprechend mindestens einer der physischen Markierungen (220, 222, 224) bestimmt wird, umfasst.

9. Verfahren nach Anspruch 1, bei dem die Anzeige in einem virtuellen Realitätsheadset beinhaltet ist.

10. Verfahren nach Anspruch 1, wobei das Schätzen eines Betrags eines akkumulierten Fehlers anhand des Akkumulationsfehlers, wenn sich das physische Objekt (500) von der zweiten Position zur ersten Position bewegt, das Vergleichen einer letzten Position, die unter Verwendung des sekundären Positionssystems erhalten wurde, als sich das physische Objekt in der zweiten Position befand, mit einer ersten nachfolgenden Position, die bestimmt wurde, nachdem das physische Objekt zur ersten Position zurückgekehrt war, umfasst.

11. Verfahren nach Anspruch 10, das nach Übergehen des physischen Objekts (500) von der zweiten Position zur ersten Position das Anzeigen des Übergehens einer virtuellen Umgebung (300) von einem geschätzten Zustand der virtuellen Umgebung (300), als sich das physische Objekt (500) in der zweiten Position befand, zu einem aktuellen Zustand der virtuellen Umgebung (300), der dem physischen Objekt (500) in der ersten Position entspricht, umfasst.

12. Verfahren nach Anspruch 1, das ferner das Erzeugen eines Ereignisses zur Anzeige in der virtuellen Umgebung (300) auf Basis der physischen Position des benutzergesteuerten physischen Objekts (500) in der physischen Umgebung (200) umfasst.

13. Verfahren nach Anspruch 1, bei dem die erste und die zweite Position des physischen Objekts (500) von einer Winkelausrichtung der Bildgebungsvorrichtung abhängig sind.

14. System zum Manövrieren eines virtuellen Objekts (350) in einer virtuellen Umgebung (300), das einem benutzergesteuerten physischen Objekt (500) in einer physischen Umgebung (200) entspricht, wobei das System Folgendes umfasst:
eine Steuerung (400), die es einem Benutzer ermöglicht, das physische Objekt (500) in der physischen Umgebung (200) zu manövrieren;
eine Bildgebungsvorrichtung, die im physischen Objekt (500) beinhaltet ist und, wenn sich das physische Objekt (500) in einer ersten Position in der physischen Umgebung (200) befindet, in der sich mindestens eine physische Markierung (220, 222, 224) in einem Sichtfeld befindet, zum Erhalten eines Bildes der mindestens einen physischen Markierung (220, 222, 224) bereitgestellt ist;
ein bildbasiertes Positionierungsmodul (422), das in der Steuerung (400) beinhaltet und zum Bestimmen einer physischen Position des physischen Objekts (500) in der physischen Umgebung (200) auf Basis einer Beurteilung des erhaltenen Bildes der mindestens einen physischen Markierung (220, 222, 224) bereitgestellt ist;
ein sekundäres Positionssystem, das im physischen Objekt (500) beinhaltet ist und, wenn sich das physische Objekt (500) in einer zweiten Position befindet, die der ersten Position folgt und in der sich nicht mehr als eine vorbestimmte Anzahl der physischen Markierungen (220, 222, 224) im Sichtfeld befinden, zum Bestimmen der physischen Position des physischen Objekts (500) bereitgestellt ist, wobei das sekundäre Positionssystem unabhängig von einem optischen Bezug auf die physischen Markierungen (220, 222, 224) betrieben wird und wobei das sekundäre Positionssystem einen Akkumulationsfehler aufweist;
ein Szenarioverarbeitungsmodul (450), das in der Steuerung (400) beinhaltet und zum Bestimmen einer virtuellen Position in der virtuellen Umgebung (300), die der bestimmten physischen Position des physischen Objekts (500) in der physischen Umgebung (200) entspricht, für das virtuelle Objekt (350) bereitgestellt ist;
eine Anzeige (600) zum Anzeigen des virtuellen Objekts (350) in einer Anzeigeposition, die der bestimmten physischen Position entspricht, und
wobei das System durch einen oder mehrere Prozessoren gekennzeichnet ist, die in der Steuerung oder im physischen Objekt beinhaltet und zu Folgendem ausgelegt sind
nach Übergehen des physischen Objekts von der ersten Position zur zweiten Position Initialisieren des sekundären Positionssystems mit Standortparametern, die einer letzten Position des physischen Objekts (500) entsprechen, die bestimmt wurde, als sich das physische Objekt (500) in der ersten Position befand,
Schätzen eines Betrags eines akkumulierten Fehlers anhand des Akkumulationsfehlers, wenn sich das physische Objekt (500) von der zweiten zur ersten Position bewegt, und
Anwenden einer Korrektur auf das sekundäre Positionssystem entsprechend des geschätzten Betrags des akkumulierten Fehlers.

## Revendications

1. Procédé, mis en œuvre par ordinateur, pour faire naviguer un objet physique (500) dans un environnement physique (200) correspondant à un objet virtuel (350) se déplaçant dans un environnement virtuel (300), comprenant les étapes ci-dessous consistant à :
A) lorsque l'objet physique (500) est dans une première position dans laquelle au moins un marqueur physique (220, 222, 224) se situe dans un champ de vision d'au moins un dispositif d'imagerie monté sur l'objet physique (500) :
i) obtenir une image dudit au moins un marqueur physique (220, 222, 224) ;
ii) déterminer une position physique de l'objet physique (500) dans l'environnement physique (200) sur la base d'une évaluation de l'image obtenue dudit au moins un marqueur physique (220, 222, 224) ; et
iii) déterminer, pour l'objet virtuel (350), une position virtuelle dans l'environnement virtuel (300) correspondant à la position physique déterminée de l'objet physique (500) dans l'environnement physique (200) ;
B) lorsque l'objet physique (500) est dans une seconde position, suivant la première position, dans laquelle tout au plus un nombre prédéterminé de marqueurs physiques (220, 222, 224) se situe dans le champ de vision :
i) estimer la position physique de l'objet physique (500) en utilisant un système de positionnement secondaire de l'objet physique (500), ledit système de positionnement secondaire fonctionnant indépendamment d'une référence optique aux marqueurs physiques (220, 222, 224) et le système de positionnement secondaire présentant une erreur d'accumulation ; et
ii) déterminer, pour l'objet virtuel (350), une position virtuelle estimée dans l'environnement virtuel (300) correspondant à la position physique estimée ; et
dans lequel le procédé est **caractérisé par** les étapes ci-dessous consistant à :
initialiser, suite à une transition de l'objet physique (500), de la première position à la seconde position, le système de positionnement secondaire, avec des paramètres de localisation correspondant à une position la plus récente de l'objet physique (500) déterminée lorsque l'objet physique (500) était dans la première position ;
estimer une quantité d'erreur cumulée à partir de l'erreur d'accumulation lorsque l'objet physique (500) se déplace de la seconde position à la première position ; et
appliquer une correction au système de positionnement secondaire correspondant à la quantité estimée d'erreur cumulée.

2. Procédé selon la revendication 1, comprenant en outre les étapes ci-dessous consistant à :
déterminer une distance physique entre l'objet physique (500) et chacun des marqueurs physiques imagés (220, 222, 224) en fonction de la taille imagée de chacun des marqueurs physiques (220, 222, 224) par rapport à une caractéristique du dispositif d'imagerie ; et
déterminer la position physique en fonction de la ou des distances physiques déterminées.

3. Procédé selon la revendication 2, dans lequel chaque marqueur physique (220, 222, 224) présente une taille prédéterminée respective dans au moins une dimension.

4. Procédé selon la revendication 2, comprenant en outre l'étape consistant à fournir, à au moins l'un des marqueurs physiques (220, 222, 224), un codage interprétable optiquement indiquant au moins une caractéristique choisie à partir du groupe constitué par : une taille prédéterminée dans au moins une dimension, une position dans l'environnement physique (200), et un type d'une caractéristique d'affichage correspondante.

5. Procédé selon la revendication 3, dans lequel l'évaluation de l'image obtenue de chaque marqueur physique imagé (220, 222, 224) comprend l'étape consistant à comparer une taille imagée de chaque image obtenue dans ladite au moins une direction à une référence dans le dispositif d'imagerie ; ou
dans lequel :
au moins l'un des marqueurs physiques (220, 222, 224) présente des tailles prédéterminées dans au moins deux dimensions ;
l'évaluation de l'image obtenue de chaque marqueur physique imagé (220, 222, 224) comprend l'étape consistant à comparer une taille imagée de chaque image obtenue dans lesdites au moins deux directions à au moins une référence respective dans le dispositif d'imagerie.

6. Procédé selon la revendication 2, comprenant en outre l'étape consistant à associer différents facteurs d'échelle à différents marqueurs physiques parmi les marqueurs physiques (220, 222, 224), de sorte que la détermination des positions virtuelles estimées des différents objets virtuels respectifs (350) les uns par rapport aux autres peut être ajustée en fonction des facteurs d'échelle respectifs.

7. Procédé selon la revendication 1, comprenant en outre l'étape consistant à, sur un écran d'affichage, générer une image de l'objet virtuel (350) à une position virtuelle déterminée dans l'environnement virtuel (300) correspondant à la position physique déterminée de l'objet physique (500) dans l'environnement physique (200).

8. Procédé selon la revendication 7, comprenant en outre l'étape consistant à associer au moins l'un des marqueurs physiques (220, 222, 224) à une caractéristique virtuelle correspondante affichée sur l'écran d'affichage,
comprenant de préférence en outre l'étape consistant à générer une image mobile d'au moins une caractéristique virtuelle mobile affichée sur l'écran affichage présentant une position de caractéristique référencée à la position virtuelle déterminée correspondant à au moins l'un des marqueurs physiques (220, 222, 224).

9. Procédé selon la revendication 1, dans lequel l'écran d'affichage est inclus dans un casque de réalité virtuelle.

10. Procédé selon la revendication 1, dans lequel l'étape d'estimation d'une quantité d'erreur cumulée à partir de l'erreur d'accumulation lorsque l'objet physique (500) se déplace de la seconde position à la première position comprend l'étape consistant à comparer une position la plus récente, obtenue en utilisant le système de positionnement secondaire lorsque l'objet physique était dans la seconde position, à une première position subséquente déterminée lorsque l'objet physique est revenu à la première position.

11. Procédé selon la revendication 10, comprenant en outre l'étape consistant à, suite à une transition de l'objet physique (500), de la seconde position à la première position, afficher un environnement virtuel de transition (300) d'un état estimé de l'environnement virtuel (300), lorsque l'objet physique (500) était dans la seconde position, à un état en cours de l'environnement virtuel (300) correspondant à l'objet physique (500) lorsqu'il était dans la première position.

12. Procédé selon la revendication 1, comprenant en outre l'étape consistant à générer un événement à afficher dans l'environnement virtuel (300) sur la base de la position physique de l'objet physique (500) commandé par l'utilisateur dans l'environnement physique (200).

13. Procédé selon la revendication 1, dans lequel les première et seconde positions de l'objet physique (500) dépendent d'une orientation angulaire du dispositif d'imagerie.

14. Système pour manœuvrer un objet virtuel (350) dans un environnement virtuel (300) correspondant à un objet physique (500) commandé par l'utilisateur dans un environnement physique (200), comprenant :
un contrôleur (400) permettant à un utilisateur de manœuvrer l'objet physique (500) dans l'environnement physique (200) ;
un dispositif d'imagerie inclus avec l'objet physique (500), et fourni, lorsque l'objet physique (500) est dans une première position dans l'environnement physique (200) où au moins un marqueur physique (220, 222, 224) se situe dans un champ de vision, pour obtenir une image dudit au moins un marqueur physique (220, 222, 224) ;
un module de positionnement basé sur l'image (422), inclus avec le contrôleur (400), fourni pour déterminer une position physique de l'objet physique (500) dans l'environnement physique (200) sur la base d'une évaluation de l'image obtenue dudit au moins un marqueur physique (220, 222, 224) ;
un système de positionnement secondaire inclus avec l'objet physique (500) fourni, lorsque l'objet physique (500) est dans une seconde position, suivant la première position, dans laquelle tout au plus un nombre prédéterminé de marqueurs physiques (220, 222,
224) se situe dans le champ de vision, pour déterminer la position physique de l'objet physique (500), ledit système de positionnement secondaire fonctionnant indépendamment d'une référence optique aux marqueurs physiques (220, 222, 224), et le système de positionnement secondaire présentant une erreur d'accumulation ;
un module de traitement de scénario (450), inclus avec le contrôleur (400), fourni pour déterminer, pour l'objet virtuel (350), une position virtuelle dans l'environnement virtuel (300) correspondant à la position physique déterminée de l'objet physique (500) dans l'environnement physique (200) ;
un écran d'affichage (600) pour afficher l'objet virtuel (350) dans une position d'affichage correspondant à la position physique déterminée ; et
dans lequel le système est **caractérisé par** un ou plusieurs processeurs inclus dans le contrôleur ou l'objet physique, et configurés de manière à :
suite à une transition de l'objet physique, de la première position à la seconde position, initialiser le système de positionnement secondaire avec des paramètres de localisation correspondant à une position la plus récente de l'objet physique (500) déterminée lorsque l'objet physique (500) était dans la première position ;
estimer une quantité d'erreur cumulée à partir de l'erreur d'accumulation lorsque l'objet physique (500) se déplace de la seconde position à la première position ; et
appliquer une correction, au système de positionnement secondaire, correspondant à la quantité estimée d'erreur cumulée.
